# EUROPÄISCHE PATENTSCHRIFT

(11) **EP 1 889 356 B1**
(45) Veröffentlichungstag und Bekanntmachung des Hinweises auf die Patenterteilung: **28.03.2018**
(21) Anmeldenummer: 06763362.8
(22) Anmeldetag: 30.05.2006
(51) Int. Cl.: H02P 25/22, H02P 23/03, H02P 25/092, H02P 25/098

(54) **VERFAHREN ZUR REGELUNG EINES RELUKTANZMOTORS**
METHOD FOR CONTROLLING A RELUCTANCE MOTOR
PROCEDE POUR REGLER UN MOTEUR A RELUCTANCE

(30) Priorität: 04.06.2005 DE 102005025770
(43) Veröffentlichungstag der Anmeldung: 20.02.2008
(73) Patentinhaber: Vorwerk & Co. Interholding GmbH, 42275 Wuppertal (DE)
(72) Erfinder: CALDEWEY, Uwe, 44229 Dortmund (DE); BÜTTGENS, Oliver, 21337 Lüneburg (DE)
(74) Vertreter: Müller, Enno
(86) Internationale Anmeldenummer: PCT/EP2006/062709
(87) Internationale Veröffentlichungsnummer: WO 2006/131459

(56) Entgegenhaltungen:
- DE-A1- 2 254 123
- DE-A1- 10 229 443
- US-A- 5 621 294
- US-A- 5 936 373
- US-A- 6 002 233

## Beschreibung

Die Erfindung betrifft ein Verfahren zur Regelung eines Reluktanzmotors nach den Merkmalen des Oberbegriffs des Anspruches 1.

Bei geschalteten Reluktanzmotoren, welche allgemein bekannt sind, hängt das gleichmäßige Laufen des Rotors sowie das Anlaufen des Rotors von der Lage desselben zum Statorfeld ab. So kann je nach Lage des Rotors zum Statorfeld das Drehmoment, insbesondere bei geringen Drehzahlen, so klein sein, dass der Rotor stehen bleibt.

Diesem Nachteil kann begegnet werden, indem zum Zeitpunkt, in dem die erste Spule bereits erregt ist, die in Drehrichtung des Rotors folgende Spule zusätzlich erregt wird. Ein derartiges Verfahren ist aus der DE 102 29 443 A1 bekannt. Durch diese Maßnahme ist der Gefahr eines ungleichmäßigen Laufens des Rotors und darüber hinaus sogar eines Stehenbleibens desselben begegnet.

Aus der DE 22 54 123 A ist es zudem bekannt, einen Zeitraum einer Verzögerung des Ausschaltens einer Spulenerregung so zu bemessen, dass sie bei niedriger Motorgeschwindigkeit wesentlich kürzer ist als die Länge eines Stromimpulses und bei höherer Motorgeschwindigkeit eine Verlängerung des Stromimpulses bewirkt wird.

Zudem ist auf den Stand der Technik nach der US 5,936,373 A zu verweisen, aus dem ein vergleichbarer Reluktanzmotor bekannt ist.

Gleichwohl ergeben sich noch gewisse Geräuschprobleme bei einem so geregelten Motor.

Ausgehend von dem genannten Stand der Technik stellt sich der Erfindung die Aufgabe, ein Verfahren zur Regelung eines Reluktanzmotors anzugeben, das insbesondere hinsichtlich einer Geräuschentwicklung vorteilhaft ist.

Diese Aufgabe ist beim Gegenstand des Anspruches 1 gelöst.

Der Rotor tendiert nicht mehr zu unangenehmen Pendelbewegungen. Vielmehr wird er zufolge des nach der aligned position eintretenden Generatorbetriebes sanft abgebremst. Der Rotor erreicht eine im übertragenen Sinn stabile Position. Die Phasenüberlappung wird solange aufrecht erhalten, bis die Phasenbestromungszeit abgelaufen ist. Über eine Sensorik wird hiernach eine Auswertung der erreichten Rotorposition vorgenommen. Bei der Regelung wird u.a. die Zeit beobachtet, die der Rotor benötigt, um die zur Erreichung der für die Einschaltung der weiteren Phase verantwortlichen Position zu erreichen. Durch das Zuschalten der zweiten Phase ergibt sich eine quasi zufällige Bestromungszeit für den zeitlichen Bereich, indem eine Phase und ggf. beide Phasen eingeschaltet sind. Hierdurch wird auch das akustische Verhalten maßgeblich verbessert, da Einzeltöne nicht mehr identifizierbar sind. Diese akustische Optimierung ist vor allem dadurch erreicht, dass ein Rotorschritt durch die zur Erreichung der für die Einschaltung der weiteren Phase verantwortlichen Position in zwei Bereiche geteilt ist, nämlich in einen Bereich vor der Position, in welcher nur eine Phase bestromt wird und in einen Bereich nach dieser Position, in welchem zwei Phasen bestromt werden. Die Zeit bis zum Erreichen der maßgebenden Position ist prinzipiell zufällig, also nicht konstant, woraus sich akustisch kein hörbarer Einzelton ergibt. Vielmehr zeigt jeder Schritt eine andere Frequenz, so dass global ein angenehmerer Klang entsteht. Neben diesem vorteilhaften akustischen Eindruck ergibt sich durch das erfindungsgemäße Verfahren auch optisch ein verändertes Rotordrehverhalten. So ist insbesondere bei sehr geringen Drehzahlen von weniger als 100 Umdrehungen pro Minute ein leicht stockender Lauf zu beobachten, welcher aus dem abwechselnden Beschleunigen im Motorbetrieb und Abbremsen im Generatorbetrieb jeweils innerhalb einer Phasenbestromung resultiert. Diese Rotordrehcharakteristik kann insbesondere bei Anwendung des Verfahrens bei einem in einem Küchengerät zur Zubereitung von Speisen oder dergleichen vorgesehenen Reluktanzmotor von Vorteil sein, da durch den leicht stockenden Lauf zwar eine kontinuierliche Bewegung des zu rührenden Gutes erreicht wird, dies jedoch unter Vermeidung einer ungewünschten Beschädigung des Gutes, insbesondere dessen Zerkleinerung.

So ist in einer bevorzugten Ausgestaltung vorgesehen, dass die Position zum Einschalten der zweiten Spule die in Rotordrehrichtung etwa 7,5° vor dem Scheitelpunkt zwischen Rotorsegment und erster Spule liegende Position ist. Die Scheitelpunktposition zwischen Rotorsegment und in Rotordrehrichtung zugeordneter erster Spule ist die bereits erwähnte aligned position. Entsprechend ist erfindungsgemäß der Einschaltpunkt für die zweite in Rotordrehrichtung folgende Spule die Position -7,5° vor der aligned position. Weiter erweist es sich als vorteilhaft, wenn in Abhängigkeit zu der Zeit, die der Rotor zur Erreichung der für die Einschaltung der weiteren Phase verantwortlichen Position benötigt, das Stromprofil verändert wird. Auch kann das Zeitfenster in Abhängigkeit der Belastung verändert werden. Bei hoher Last kann es günstiger sein, dass die Einschaltposition für die zweite Spule früher erreicht wird. In einer weiteren Ausgestaltung kann in vorteilhafter Weise auf die einwirkende Belastung reagiert werden. So kann in Abhängigkeit von einem, ggf. hintereinander sich wiederholenden Nichterreichen der zur Auslösung der Bestromung der weiteren Phase maßgebenden Position eine Richtungsumkehr der Rotordrehung bewirkt werden. Der Rotor wird entsprechend gezielt in die entgegengesetzte Richtung bewegt. Hierdurch kann bei Anordnung des mit dem erfindungsgemäßen Verfahren zu regelnden Reluktanzmotors beispielsweise in einem für die Speisebereitung vorgesehenen Rührgefäß ein Verklemmen von Gut oder dergleichen in dem Gefäß verhindert werden. Bei entsprechend starker Verklemmung könnte eine Zerstörung und ggf. eine ungewollte Zerkleinerung des Gutes erfolgen. Es ist somit ein sensibel reagierendes Verfahren zur Regelung eines Reluktanzmotors gegeben. Bevorzugt wird die Richtungsumkehr nur über einen vorgegebenen Drehwinkel beibehalten, so beispielsweise um ca. 90°. Alternativ kann die Richtungsumkehr auch zeitlich begrenzt sein. Auch ist vorgesehen, dass die Stromstärke, mit welcher die jeweils erste Phase erregt wird, nicht unter eine Mindeststromstärke abgesenkt wird. Durch die Einstellung eines Mindeststromes für den Motorbetrieb in einer Stufe des Reluktanzmotors mit sehr geringer Drehzahl ergibt sich ein charakteristisches Drehverhalten. Der Motor läuft hierbei nicht gleichmäßig, sondern eher schrittartig. Dies wird durch ein entsprechendes Betriebsgeräusch unterstützt, zufolge dessen eine eindeutige optische und akustische Unterscheidung zum normalen Motorbetrieb gegeben ist.

In einer weiter bevorzugten Ausgestaltung ist vorgesehen, dass zur Vermeidung eines Einzeltons eine an sich - für den Betrachter - feste Drehfrequenz des Rotors aus Rotorschritten unterschiedlicher - für den Betrachter nicht zu ermittelnder - Bewegungsintensitäten zusammengesetzt wird. Hierbei sind auch die nach einer Umdrehung um 360° wiederkehrenden Rotorschritte jeweils in ihrer Bewegungsintensität verschieden. Ein Rotorschritt umfasst eine Beschleunigungsphase und eine Abbremsphase. Bevorzugt erfolgt hierbei die Regelung des Motorstromes durch Auswertung der erreichten Rotorposition innerhalb eines solchen Rotorschrittes, wobei die Positionserfassung mittels Sensoren erfolgen kann, die bei einer beispielhaften Ausgestaltung des Motors als Vier- / Sechs-Reluktanzmotor, das heißt als Motor mit vier Rotorsegmenten und sechs Statorpolen, den Rotor innerhalb eines Rotationswinkels von etwa 15° erfassen können. Bezüglich der Rotorpositionserfassung sowie bezüglich der Anordnung der Sensoren und der Auswertung der durch den Rotorlauf erzeugten Sensorsignale wird auf die eingangs erwähnte DE 102 29 443 A1 verwiesen.

Es wird bevorzugt ein Reluktanzmotor verwendet, der Drehzahlen bis 12000 Umdrehungen pro Minute und mehr ermöglicht. So kann das Verfahren weiter bei einem 8/6-SR-Motor Verwendung finden, der mit einer Sensorik versehen ist, so beispielsweise mit zwei Gabellichtschranken. Eine solche Sensorik ist aus der eingangs erwähnten DE 102 29 443 A1 bekannt. Diese liefert 24 Impulse pro Umdrehung des Rotors und gibt gleichzeitig eine feste Beziehung zwischen Rotorposition und Statorphase vor. Über die Sensorik ist der Bereich von -22,5° bis -7,5° mechanisch vor der aligned position einer Phase zugeordnet. Durch das erfindungsgemäße Verfahren wird bei Erreichen der -7,5°-Position die nächstfolgende Phase gleichzeitig mit eingeschaltet, womit der Rotor rein statisch betrachtet eine Position bis hin zu ca. +10° hinter der aligned position der zuletzt eingeschalteten Phase erreichen kann. Im Gegensatz zu der Bestromung mit nur einer Phase kommt es hierbei nicht zu den unangenehmen Pendelbewegungen des Rotors, vielmehr wird der Rotor sanft abgebremst und erreicht eine quasi stabile Position. Die Phasenüberlappung wird solange aufrechterhalten, bis die Phasenbestromungszeit abgelaufen ist. Über die Sensorik kann nun eine Auswertung der erreichten Position vorgenommen werden. Hierbei gibt es drei Fälle:
a) der Rotor erreicht nicht die -7,5°-Position in Bezug auf die aligned position,
b) der Rotor steht im Bereich -7,5° bis + 7,5° in Bezug auf die aligned position,
c) der Rotor steht im Bereich >+7,5° in Bezug auf die aligned position.

In Abhängigkeit von der erreichten Position wird der Motorstrom eingestellt.

In der beigefügten Diagrammdarstellung sind die Bestromungen zweier in Rotordrehrichtung hintereinanderliegender Phasen PH₁ und PH₂ dargestellt, die nach Maßgabe des abgetragenen Zeitfensters t erfolgen. Letzteres ist in Abhängigkeit zur erfassten Rotorlage nach Ablauf des Zeitfensters änderbar, was entsprechend auch die Bestromung der Phasen PH₁ und PH₂ und somit auch die Phasenüberlappung beeinflusst. So kann bspw. der Abschaltzeitpunkt der in Rotordrehrichtung ersten Phase PH₁ in Abhängigkeit zur Lageerkennung auch vor der aligned position liegen. Bevorzugt erstreckt sich die Bestromung der Phase PH₁ aber über diesen Punkt bis hin zu 7,5° hinter der aligned position hinaus.

Das Zeitfenster t kann bspw. auch (wie in der Darstellung in gestrichelter Linienart wiedergegeben) so gewählt sein, dass die nachfolgende Phase PH₂ erst im Winkelbereich zwischen -7,5° und aligned position zugeschaltet wird und eine Abschaltung der ersten Phase im Winkelbereich zwischen aligned position und +7,5° erfolgt. Entsprechend ist die Phasenüberlappung kleiner gewählt.

Bei Lastsprüngen reagiert das Verfahren sehr tolerant. Überschwingneigungen fallen sehr gering aus. Zudem werden Lastsprünge sehr schnell ausgeregelt. Die Drehzahl des Rotors kann mittels des erfindungsgemäßen Verfahrens im Bereich von 0 bis 500 Umdrehungen pro Minute, bevorzugt von 0 - 200 Umdrehungen pro Minute eingestellt werden.

Zufolge des erfindungsgemäßen Verfahrens kann ein Motor, der nominell für wesentlich höhere Drehzahlen ausgelegt ist, auch mit sehr kleinen Drehzahlen betrieben werden. Beim Einsatz eines entsprechend geregelten Reluktanzmotors in einem zur Speisebereitung dienenden Gar- / Rührgerätes wird der vorteilhafte Effekt erreicht, dass entgegen üblicher Ansteuerung eine geringere Beschädigung von Gargut erreicht wird. Es wird erkannt, ob Gargut in dem Gefäß verklemmt ist, was eine Reaktion in Form einer Rückwärtsdrehung des Rotors zur Folge hat. Auch ist eine Reduzierung der Momentenwelligkeit durch Phasenüberlappung sowie eine Reduzierung der Schwingneigung des Rotors durch Ausnutzung des Bremseffektes bei Überschreiten der aligned position hinaus erreicht. Als besonders vorteilhaft erweist sich das erfindungsgemäße Verfahren dahingehend, dass hierdurch ein getriebeloser Reluktanzmotor mit Drehzahlen von 0 bis 12000 Umdrehungen pro Minute und mehr betrieben werden kann. Grundsätzlich kann das erfindungsgemäße Verfahren zum Anlauf von SR-Motoren verwendet werden, da eine automatische Anpassung an die Lastbedingungen erreicht werden kann.

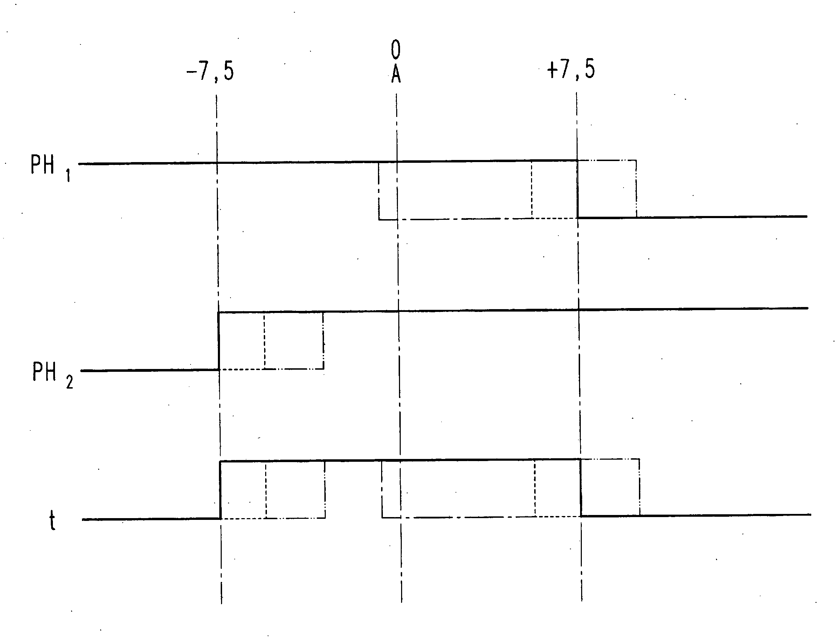

## Patentansprüche

1. Verfahren zur Regelung eines Reluktanzmotors mit einem Rotor und einem Stator, wobei der Rotor eine Mehrzahl von Rotorsegmenten aufweist und der Stator eine davon abhängige Anzahl von Spulen, so beispielsweise bei sechs Rotorsegmenten acht Spulen, mit einer Ansteuervorrichtung, welche eine Spannung auf eine Spule einer jeweiligen Phase des Stators anlegt, wobei zu einem Zeitpunkt, in dem eine erste Spule bereits erregt ist, nämlich bei Bewegung eines Rotorsegmentes zu der Spule hin, die zweite, in Drehrichtung des Rotors folgende Spule bereits zusätzlich erregt sein kann und wobei mittels Sensoren eine Lageerkennung des Rotors durchgeführt wird, wobei weiter nach Maßgabe eines vorgegebenen, jedoch änderbaren Zeitfensters die Erregung der ersten Spule vorgenommen wird und innerhalb des Zeitfensters nach Maßgabe der Lageerkennung des Rotors die folgende Spule im Sinne einer Phasenüberlappung erregt wird, wobei die Phasenüberlappung bis zum Ablauf des Zeitfensters beibehalten wird, **dadurch gekennzeichnet, dass** das Zeitfenster sich bis über die aligned position, der Totpunktstellung von Rotorsegment zu der in Rotordrehrichtung folgenden Spule, hinaus erstreckt, derart, dass zufolge eines eintretenden Generatorbetriebes eine Abbremsung erfolgt und sich bei Drehzahlen unter 100 U/min aus abwechselnder Beschleunigung im Motorbetrieb und Abbremsung im Generatorbetrieb ein stockender Motorlauf ergibt..

2. Verfahren nach Anspruch 1, **dadurch gekennzeichnet, dass** die Position zum Einschalten der zweiten Spule die in Rotordrehrichtung etwa 7,5° vor dem Scheitelpunkt zwischen Rotorsegment und erster Spule liegende Position ist.

3. Verfahren nach einem der Ansprüche 1 oder 2, **dadurch gekennzeichnet, dass** in Abhängigkeit zu der Zeit, die der Rotor zur Erreichung der für die Erregung der folgenden Spule verantwortlicher Position benötigt, das Stromprofil verändert wird.

4. Verfahren nach einem der Ansprüche 1 bis 3, **dadurch gekennzeichnet, dass** das Zeitfenster in Abhängigkeit der Belastung verändert wird.

5. Verfahren nach einem der Ansprüche 1 bis 4, **dadurch gekennzeichnet, dass** in Abhängigkeit von einem, ggf. hintereinander sich wiederholenden Nichterreichen der zur Auslösung der Erregung der folgenden Spule maßgebenden Position eine Richtungsumkehr der Rotordrehung bewirkt wird.

6. Verfahren nach einem Anspruch 5, **dadurch gekennzeichnet, dass** die Richtungsumkehr nur über einen vorgegebenen Drehwinkel beibehalten wird.

7. Verfahren nach einem der Ansprüche 1 bis 6, **dadurch gekennzeichnet, dass** die Stromstärke, mit welcher die jeweils erste Spule erregt wird, nicht unter eine Mindeststromstärke abgesenkt wird.

8. Verfahren nach einem der Ansprüche 1 bis 7, **dadurch gekennzeichnet, dass** zur Vermeidung eines Einzeltons eine an sich feste Drehfrequenz des Rotors aus Rotorschritten unterschiedlicher Bewegungsintensitäten zusammengesetzt wird.

9. Verfahren nach einem der Ansprüche 1 bis 8, **dadurch gekennzeichnet, dass** ein Rotorschritt eine Beschleunigungsphase und eine Abbremsphase umfasst.

10. Verfahren nach einem der Ansprüche 1 bis 9, **dadurch gekennzeichnet, dass** die Regelung des Motorstromes durch Auswertung der erreichten Rotorposition innerhalb eines Rotorschrittes erfolgt.

## Claims

1. Method for controlling a reluctance motor, the motor comprising a rotor and a stator, the rotor having a plurality of rotor segments and the stator having a number of coils which is dependent on the number of said rotor segments, thus for example eight coils for six rotor segments, and a drive apparatus which applies a voltage to a coil of a respective phase of the stator, it being possible to already additionally excite the second coil, which follows in the direction of rotation of the rotor, at a time during which a first coil is already excited, specifically when a rotor segment moves towards the coil, and the position of the rotor being detected by means of sensors, the first coil furthermore being excited in accordance with a predefined but variable time window and the following coil being excited with phase overlapping within the time window in accordance with the position detection of the rotor, the phase overlapping being maintained until the time window elapses, **characterized in that** the time window extends beyond the aligned position, the dead centre position of the rotor segment in relation to the coil which follows in the direction of rotation of the rotor, in such a way that braking is performed as a result of a generator mode commencing, and faltering running of the motor being produced at rotational speeds of below 100 rpm by alternating acceleration during the motor mode and braking during the generator mode.

2. Method according to Claim 1, **characterized in that** the position for switching on the second coil is the position approximately 7.5° ahead of the apex between the rotor segment and the first coil, in the direction of rotation of the rotor.

3. Method according to either of Claims 1 and 2, **characterized in that** the current profile is varied as a function of the time which is required by the rotor to reach the position which is responsible for exciting the following coil.

4. Method according to one of Claims 1 to 3, **characterized in that** the time window is varied as a function of the load.

5. Method according to one of Claims 1 to 4, **characterized in that** the direction of rotation of the rotor is reversed dependent on, possibly successively, not reaching the relevant position.

6. Method according to Claim 5, **characterized in that** the reversal in direction is maintained only over a predefined angle of rotation.

7. Method according to one of Claims 1 to 6, **characterized in that** the current intensity with which the respectively first coil is excited is not reduced below a minimum current intensity.

8. Method according to one of Claims 1 to 7, **characterized in that** an inherently fixed rotation frequency of the rotor is made up of rotor steps of different movement intensities, in order to avoid a single tone.

9. Method according to one of Claims 1 to 8, **characterized in that** a rotor step comprises an acceleration phase and a braking phase.

10. Method according to one of Claims 1 to 9, **characterized in that** the motor current is controlled by evaluating the rotor position reached within a rotor step.

## Revendications

1. Procédé de commande d'un moteur à réluctance avec un rotor et un stator, dans lequel le rotor comprend une pluralité de segments de rotor et le stator un nombre de bobines qui en dépend, par exemple huit bobines dans le cas de six segments de rotor, avec un dispositif de commande qui applique une tension à une bobine d'une phase respective du stator, dans lequel à un moment où une première bobine est déjà excitée, à savoir lors du mouvement d'un segment de rotor vers la bobine, la deuxième bobine qui suit dans la direction de rotation du rotor, peut déjà être excité en sus et dans lequel une détection de position du rotor est réalisée au moyen de capteurs, dans lequel en outre l'excitation de la première bobine est réalisée conformément à une fenêtre temporelle prédéfinie, mais modifiable, et la bobine suivante est excitée en vue d'un chevauchement de phase à l'intérieur de la fenêtre temporelle en fonction de la détection de position du rotor, dans lequel le chevauchement de phase est maintenu jusqu'à la fin de la fenêtre temporelle, **caractérisé en ce que** la fenêtre temporelle s'étend au-delà de la position alignée, la position de point mort du segment de rotor par rapport à la bobine suivante dans la direction de rotation du rotor, de manière à ce qu'il se produise un freinage en conséquence de la survenance d'un fonctionnement en générateur et que pour des vitesses de rotation en-dessous de 100 tours par minute il se produise un fonctionnement ralenti du moteur de par l'alternance d'accélération en fonctionnement en moteur et de freinage en fonctionnement en générateur.

2. Procédé selon la revendication 1, **caractérisé en ce que** la position pour activer la deuxième bobine est la position située approximativement à 7,5° dans la direction de rotation du rotor du sommet entre le segment de rotor et la première bobine.

3. Procédé selon l'une des revendications 1 ou 2, **caractérisé en ce que** le profil de courant est modifié en fonction du temps nécessaire au rotor pour atteindre la position responsable de l'excitation de la bobine suivante.

4. Procédé selon l'une des revendications 1 à 3, **caractérisé en ce que** la fenêtre temporelle est modifiée en fonction de la charge.

5. Procédé selon l'une des revendications 1 à 4, **caractérisé en ce qu'**est réalisé une inversion de sens de rotation du rotor en fonction d'une non-atteinte, ou le cas échéant de non-atteintes se répétant consécutivement, de la position qui détermine le déclenchement de l'excitation de la bobine suivante.

6. Procédé selon la revendication 5, **caractérisé en ce que** l'inversion de sens est maintenue seulement sur un angle de rotation prédéfini.

7. Procédé selon l'une des revendications 1 à 6, **caractérisé en ce que** l'intensité du courant avec laquelle la première bobine respective est excitée n'est pas abaissée sous une intensité minimale de courant.

8. Procédé selon l'une des revendications 1 à 7, **caractérisé en ce que**, pour éviter une émission d'un son particulier, une fréquence de rotation fixe en soi du rotor est fournie par assemblage de pas de rotor ayant des intensités de mouvement différentes.

9. Procédé selon l'une des revendications 1 à 8, **caractérisé en ce qu'**un pas de rotor comprend une phase d'accélération et une phase de freinage.

10. Procédé selon l'une des revendications 1 à 9, **caractérisé en ce que** la commande du courant du moteur est effectuée par l'évaluation de la position atteinte par le rotor lors d'un pas de rotor.
